# FASCICULE DE BREVET EUROPEEN

(11) **EP 4 132 668 B1**
(45) Date de publication et mention de la délivrance du brevet: **12.11.2025**
(21) Numéro de dépôt: 21716210.6
(22) Date de dépôt: 06.04.2021
(51) Int. Cl.: H04N 1/00, H04N 1/195, H04N 1/21, H04N 23/73, H04N 23/76, A63F 3/06, A63F 9/24

(54) **PROCEDE ET DISPOSITIF D'IMAGERIE DE DOCUMENTS**
VERFAHREN UND VORRICHTUNG ZUR ABBILDUNG VON DOKUMENTEN
METHOD AND DEVICE FOR DOCUMENT IMAGING

(30) Priorité: 06.04.2020 FR 2003432
(43) Date de publication de la demande: 15.02.2023
(73) Titulaire: Carrus Gaming, 75010 Paris (FR)
(72) Inventeur: ROSTAING, Laurent Patrice, 75010 PARIS (FR); ROUH, Alain, 75010 PARIS (FR); LE GOUIL, Elise, 75010 PARIS (FR)
(74) Mandataire: Fidal Innovation
(86) Numéro de dépôt international: PCT/EP2021/058890
(87) Numéro de publication internationale: WO 2021/204772

(56) Documents cités:
- WO-A1-2009/029772
- US-A- 4 318 135
- US-A1- 2005 029 352
- US-A1- 2011 149 353

## Description

### DOMAINE DE L'INVENTION

La présente invention concerne un dispositif d'imagerie de documents, et un procédé d'imagerie de documents.

Ce dispositif et ce procédé trouvent avantageusement application pour imager des documents relatifs à un jeu.

### ETAT DE LA TECHNIQUE

Certains terminaux de jeu comprennent un dispositif d'imagerie pour acquérir des images de documents relatifs à un jeu (bulletin de jeu, reçu, etc.), dans le but d'en analyser le contenu. Ces terminaux comprennent typiquement une cavité où un document doit être placé. Une caméra acquiert ensuite une image du document, et cette image fait l'objet d'une analyse.

Or, une telle analyse peut échouer lorsque l'image acquise par la caméra ne montre que très imparfaitement le contenu du document placé dans la cavité. Ce problème peut avoir plusieurs causes :
- Des perturbations ambiantes, par exemple le soleil, peuvent pénétrer dans cette cavité du terminal.
- Un revêtement fortement réfléchissant du document (par exemple dans un passeport ou une carte d'identité), générant des saturations dans l'image acquise par la caméra.

Le document WO 2009/029772 A1 qui est considéré comme l'état de la technique le plus proche de l'objet des revendications indépendantes 1 et 14, divulgue un scanner amélioré qui comprend un enclos avec des protections contre la lumière sur au moins trois côtés, des caméras doubles, des techniques d'éclairage synchronisées pendant la séquence de balayage ou encore des filtres et de l'éclairage monochromatique, tout cela afin de limiter l'impact de l'éclairage du scanner et de l'éclairage ambiant sur l'exposition des images.

### EXPOSE DE L'INVENTION

La portée de la présente invention est définie par les revendications.

Un but de l'invention est de résoudre le problème susmentionné.

Il est à cet effet proposé, selon un premier aspect, un procédé d'imagerie d'un document, comprenant les étapes suivantes :
- acquisition par une caméra d'une vidéo montrant un support formant un fond d'une cavité ouverte en permanence, pendant qu'aucun objet ne fait obstacle entre le support et la caméra,
- ajustement d'un premier paramètre de la caméra de sorte à atténuer une perturbation de rendu du support dans la vidéo causée par un éclairage parasite provenant d'une source parasite, le premier paramètre atteignant une valeur modifiée à l'issue de l'ajustement,
- à partir de la valeur modifiée, estimation d'un niveau de la perturbation d'éclairage,
- à partir du niveau de la perturbation d'éclairage estimé, détermination d'au moins un deuxième paramètre, dont un paramètre d'éclairage d'une source d'éclairage et/ou un paramètre d'acquisition d'instantané de la caméra,
- pendant qu'un document est posé immobile sur le support, éclairage du document par la source d'éclairage et acquisition par la caméra d'un instantané montrant le document, à l'aide du deuxième paramètre déterminé.

Le procédé selon le premier aspect peut comprendre les caractéristiques optionnelles suivantes, prises seules ou combinées entre elles lorsque cela est techniquement faisable.

De préférence, le procédé comprend une répétition des étapes d'acquisition et d'ajustement jusqu'à ce qu'une caractéristique de rendu du support dans une vidéo acquise par la caméra respecte un critère de rendu prédéfini, la valeur modifiée étant atteinte par le premier paramètre à l'issue de la répétition.

De préférence, la caractéristique du rendu du support est une moyenne de valeurs de pixels qui montrent le support dans une image de la vidéo.

De préférence, le procédé comprend en outre une détection d'immobilité du document par rapport au support, l'éclairage du document par la source d'éclairage et l'acquisition de l'instantané étant mis en œuvre en réponse à la détection d'immobilité.

De préférence, le procédé comprend par ailleurs la mise en œuvre des étapes suivantes jusqu'à ce qu'une caractéristique de rendu du document dans un instantané acquis par la caméra respecte un critère de rendu prédéfini :
- ajustement du deuxième paramètre, et
- acquisition par la caméra d'un autre instantané en utilisant le deuxième paramètre ajusté.

De préférence, la source d'éclairage comprend plusieurs éléments éclairants orientés vers différentes zones du support, et l'ajustement d'au moins un deuxième paramètre comprend une désactivation d'au moins un des éléments éclairants.

De préférence, la caractéristique de rendu du document dans un instantané acquis par la caméra est une mesure statistique d'une dynamique de pixels montrant le document dans l'instantané.

De préférence, le procédé comprend par ailleurs les étapes suivantes mises en œuvre avant l'acquisition de l'instantané :
- acquisition par la caméra d'une autre vidéo montrant le document se déplaçant vers le support,
- ajustement du premier paramètre depuis la valeur modifiée vers une valeur affinée, jusqu'à ce qu'une caractéristique de rendu du document dans une image de l'autre vidéo respecte un critère de rendu prédéfini, le deuxième paramètre étant déterminé en fonction de la valeur affinée.

De préférence, la caractéristique de rendu du document dans une image de l'autre vidéo est une mesure statistique d'une dynamique de pixels montrant le document dans l'image de l'autre vidéo.

De préférence, le premier paramètre est une durée d'exposition ou un gain de la caméra.

De préférence, la source d'éclairage éclaire le support avec une première puissance d'éclairage pendant l'acquisition de la vidéo, et avec une deuxième puissance d'éclairage supérieure à la première puissance d'éclairage pendant l'acquisition de l'instantané.

De préférence, la détermination d'au moins un deuxième paramètre comprend la détermination d'une puissance d'éclairage qui croît avec le niveau estimé de la perturbation d'éclairage.

Il est également proposé, selon un deuxième aspect, un dispositif d'imagerie d'un document, comprenant un support formant un fond d'une cavité ouverte en permanence, une caméra, une source d'éclairage et un module de commande configuré pour :
- commander l'acquisition par la caméra d'une vidéo montrant le support pendant qu'aucun objet ne fait obstacle entre le support et la caméra,
- ajuster un premier paramètre de la caméra de sorte à atténuer une perturbation de rendu du support dans la vidéo causée par un éclairage parasite provenant d'une source parasite, le premier paramètre atteignant une valeur modifiée à l'issue de l'ajustement,
- à partir de la valeur modifiée, estimer un niveau de la perturbation d'éclairage,
- à partir du niveau de la perturbation d'éclairage estimé, déterminer au moins un deuxième paramètre, dont un paramètre d'éclairage de la source d'éclairage et/ou un paramètre d'acquisition d'instantané de la caméra,
- pendant qu'un document est posé immobile sur le support, commander l'éclairage du document par la source d'éclairage et l'acquisition par la caméra d'un instantané montrant le document, à l'aide du deuxième paramètre déterminé.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

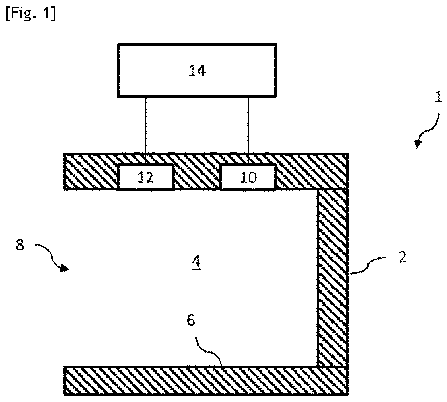

[Fig. 1] La figure 1 illustre de façon schématique un dispositif d'imagerie selon un mode de réalisation.
[Fig. 2]
[Fig. 3]

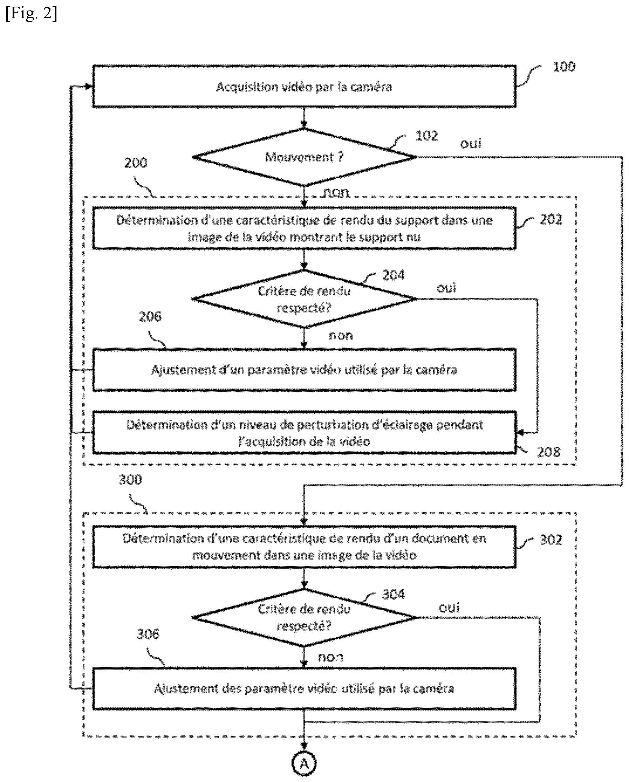

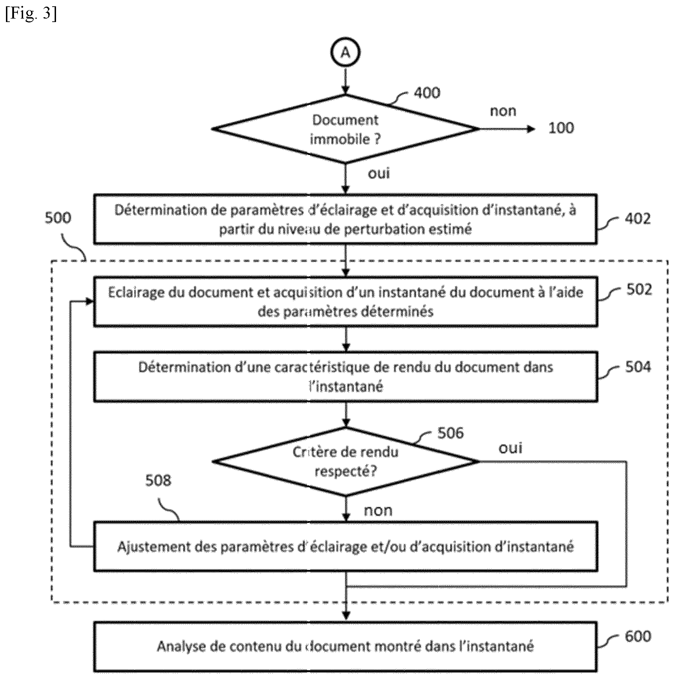

Les figure 2 et 3 sont deux organigrammes d'étapes d'un procédé d'imagerie selon un mode de réalisation de l'invention.

Sur l'ensemble des figures, les éléments similaires portent des références identiques.

### DESCRIPTION DETAILLEE DE L'INVENTION

En référence à la **figure 1****,** un dispositif d'imagerie 1 pour acquérir des images d'un document comprend un boîtier 2 définissant une cavité 4 pour recevoir un document à analyser.

Le dispositif d'imagerie 1 comprend un support 6 sur lequel un document reçu dans la cavité 4 peut reposer. Ce support 6 présente une surface libre formant un fond de la cavité 4. La surface libre est plane. On appelle « plan de pose » le plan dans lequel la surface libre s'étend.

Le boîtier 2 comprend en outre une paroi supérieure, opposée au fond par rapport à la cavité. La paroi supérieure présente une surface libre formant un plafond de la cavité.

Le boîtier 2 comprend par ailleurs des parois verticales, reliant la paroi supérieure au fond. Les parois verticales comprennent typiquement deux parois latérales opposées l'une à l'autre par rapport à la cavité (non visible sur la figure 1), et possiblement une paroi arrière (située à la droite de la cavité 4, sur la figure 1).

Le boîtier définit une ouverture avant 8 qui est opposée à la paroi arrière, par rapport à la cavité 4. Un document peut être introduit dans la cavité 4 via l'ouverture avant 8, et être placée à plat sur le support 6. Dans une variante non illustrée, la paroi arrière est remplacée par une ouverture arrière.

Par le biais de l'ouverture avant 8, la cavité est en permanence ouverte sur l'extérieur du système. En conséquence, le support 6 ou tout document posé sur le support 6 peut être éclairé par des sources d'éclairage extérieures au système, qui, comme on le verra dans la suite, sont considérées comme des sources d'éclairage parasites susceptibles de dégrader le fonctionnement du dispositif d'imagerie. Par convention, on appellera ou « éclairage externe » l'ensemble des rayons lumineux provenant de l'extérieur du système, pénétrant dans la cavité par l'ouverture avant 8 et atteignant le support 6.

Le dispositif d'imagerie 1 comprend par ailleurs une source d'éclairage 10 dite « source d'éclairage interne » par opposition aux sources d'éclairages extérieures au système.

La source d'éclairage interne 10 comprend plusieurs éléments éclairants agencés dans le boîtier, de sorte à éclairer la cavité, et en particulier le support. Les éléments éclairants sont typiquement agencés dans la paroi supérieure.

Les différents éléments éclairants sont agencés pour projeter des faisceaux lumineux vers différents zones du support 6. Ces zones peuvent se superposer partiellement. Les centres respectifs de projection de ces faisceaux lumineux sont ainsi différents. Par exemple, la source d'éclairage interne 10 comprend quatre élément éclairants orientés vers quatre zones différentes de la surface libre du support.

Chaque élément éclairant peut être activé ou désactivé, indépendamment des autres éléments éclairants. Par convention, on considère que la puissance d'éclairage utilisée par la source d'éclairage interne correspond à la somme des puissances d'éclairages utilisées par chaque élément éclairant activé.

La source d'éclairage interne 10 est configurée pour éclairer le support 6 (et, par extension, tout document posé dessus) à l'aide de paramètres d'éclairage qui sont ajustables.

Les paramètres d'éclairage comprennent la puissance d'éclairage utilisée par la source d'éclairage interne, ainsi que l'état de chaque élément éclairant (actif/inactif).

Le dispositif d'imagerie 1 comprend par ailleurs une caméra 12 pour acquérir des images montrant le support (et, par extension, la surface supérieure d'un document posé sur le support).

La caméra 12 est en regard du support 6. La caméra 12 est par exemple agencée dans la paroi supérieure du boîtier 2.

La caméra 12 utilise des paramètres d'acquisition ajustables pour acquérir des images.

Les paramètres d'acquisition de la caméra 12 comprennent un temps de pose (également appelé temps d'intégration ou durée d'exposition dans la littérature). Le temps de pose est l'intervalle de temps pendant lequel un photodétecteur de la caméra 12 reçoit de la lumière pour construire une image individuelle.

Les paramètres d'acquisition de la caméra comprennent par ailleurs un gain utilisé par un circuit d'amplification de la caméra 12.

Les paramètres d'acquisition de la caméra comprennent par ailleurs une résolution.

La caméra 12 a deux modes de fonctionnement : un mode vidéo et un mode instantané.

Dans le mode vidéo, la caméra 12 acquière une succession d'images formant ainsi ensemble une vidéo, en utilisant des paramètres d'acquisition vidéo, correspondant à des valeurs particulières des paramètres d'acquisition de la caméra. Ainsi, dans le mode vidéo, la caméra utilise des valeurs spécifiques de temps de pose, de gain et de résolution.

Dans le mode instantané, la caméra 12 acquière une image unique que l'on appelle dans la suite « instantané » (snapshot en anglais) en utilisant des paramètres d'acquisition d'instantané, correspondant à des valeurs particulières des paramètres d'acquisition de la caméra. Ainsi, dans le mode instantané, la caméra utilise des valeurs de temps de pose, de gain et de résolution potentiellement différentes de celles utilisés dans le mode vidéo.

Les paramètres d'acquisition vidéo et les paramètres d'acquisition d'instantané peuvent être ajustés indépendamment les uns des autres. Il est possible, par exemple, de régler le gain utilisé par la caméra 12 en mode vidéo à une première valeur, et le gain utilisé par la caméra 12 en mode instantané à une deuxième valeur différente de la première valeur. Il en va de même pour les autres paramètres de la caméra 12.

En particulier, une différence entre le mode instantané et le mode vidéo réside dans le fait que la résolution d'un instantané acquis par la caméra 12 configurée dans le mode instantané est supérieure à la résolution de toute image faisant partie d'une vidéo acquise par la caméra 12 configurée dans le mode vidéo.

La caméra 12 est par ailleurs adaptée pour acquérir des images dans des gammes de longueur d'onde différentes : des images dans le domaine visible, des images dans le domaine infrarouge, et des images dans le domaine des ultraviolets. Pour acquérir ces différents types d'image, la caméra comprend des moyens de filtrage optique en longueur d'onde, par exemple un filtre double bande.

Le dispositif d'imagerie 1 comprend par ailleurs un module de commande 14 pour commander la caméra 12 et la source d'éclairage interne 10.

Le module de commande 14 comprend une unité de traitement d'images configuré pour détecter un document dans une image acquise par la caméra 12. En particulier, l'unité de traitement d'image est capable de détecter des documents structurés de types prédéfinis, sur lesquels ont été imprimés des éléments graphiques selon une structure prédéfinie, notamment des chaînes de caractères.

L'unité de traitement d'image est par ailleurs configurée pour suivre un mouvement d'un tel document dans une vidéo acquise par la caméra 12. Le module de traitement est en particulier capable de déterminer si un document détecté dans une vidéo est en mouvement par rapport au support 6, ou posé immobile sur le support 6.

Le module de commande 14 est par ailleurs configuré pour ajuster dynamiquement les paramètres utilisés par la source d'éclairage interne 10 et la caméra 12.

Le module de commande 14 comprend typiquement au moins un des éléments suivants : processeur, microprocesseur, circuit programmable ou non (ASIC, FPGA). Les fonctions de traitement d'images précitées sont par exemple mises en œuvre par un programme de traitement d'image exécuté par le module de traitement d'image.

Le dispositif d'imagerie peut typiquement être ou incorporé dans un terminal de jeu ayant vocation à analyser des documents structurés des types suivants : bulletins de jeu, reçus constituant des preuves matérielles de participation à un jeu et/ou d'obtention d'un gain, documents d'identité (par exemple carte nationale d'identité ou passeport).

Il va maintenant être décrit un procédé mis en œuvre à l'aide du dispositif 1 décrit précédemment, en référence à la **figure 2****.**

On suppose que la caméra 12 est initialement configurée mode vidéo.

La caméra 12 acquiert une vidéo (étape 100), et utilise pour cette acquisition les paramètres d'acquisition vidéo positionnés à des valeurs initiales. La vidéo comprend une seule image ou une séquence d'images.

Au cours de l'acquisition de la vidéo, le module de commande 14 commande l'utilisation, par la source d'éclairage interne 10, d'une première puissance d'éclairage pour éclairer le support 6. Cette première puissance d'éclairage est faible, voire minimale, mais tous les éléments éclairants peuvent être activés pour générer cette première puissance d'éclairage. Cette caractéristique permet d'éviter d'éblouir une personne se trouvant à proximité du dispositif 1. Ce problème se pose d'autant plus que la cavité 4 est ouverte en permanence.

Un autre avantage de cette caractéristique est de permettre au système de fonctionner dans un environnement très sombre ou complètement dans l'obscurité.

La vidéo est transmise par la caméra 12 au module de commande 14.

Sur la base de la vidéo acquise, le module de commande 14 vérifie si un objet, tel qu'un document, est présent ou absent dans la cavité, et, en cas de présence d'un tel objet, vérifie si l'objet est en mouvement par rapport au support 6 (étape 102).

En fonction du résultat de cette vérification, différents traitements sont mis en œuvre par le module de commande 14.

Dans un premier cas, le module de commande 14 détecte, sur la base de la vidéo, qu'aucun objet n'est en mouvement dans la cavité, et en particulier qu'aucun document n'est présent dans la cavité ou en cours d'introduction dans cette cavité. Dans ce premier cas, le module de commande 14 met en œuvre un traitement 200 appelé « asservissement du plan de pose ».

Dans un deuxième cas, le module détecte, sur la base de la vidéo, qu'un objet, par exemple un document, est en cours d'introduction dans la cavité : ce document est donc en mouvement par rapport au support 6. Dans ce deuxième cas, le module de commande 14 met en œuvre un autre traitement 300, appelé « asservissement objet ».

Dans un scénario d'utilisation classique du dispositif d'imagerie 1, la cavité 4 est d'abord vide. Ultérieurement, un utilisateur introduit un document dans la cavité par l'ouverture avant. Au cours de cette introduction, le document, en mouvement par rapport au support 6, entre dans le champ de vision de la caméra 12. Ainsi, dans ce scénario, le traitement 200 d'asservissement du plan de pose est mis en œuvre dans un premier temps, et le traitement 30 d'asservissement objet dans un deuxième temps.

Le traitement 200 d'asservissement du plan de pose comprend les sous-étapes suivantes.

Le module de commande 14 détermine une caractéristique du rendu du support 6 dans une image de la vidéo montrant le support 6 nu, c'est-à-dire ne montrant aucun objet entre le support 6 et la caméra 12 (étape 202).

La caractéristique de rendu du support 6 est une donnée qui varie en fonction de l'éclairage externe. Par exemple, en présence d'un éclairage externe de forte intensité, de nombreux pixels de l'image montrant le support 6 peuvent être blancs ou proches du blanc, ce qui se répercute sur la donnée caractéristique de rendu du support 6 dans l'image.

De préférence, la donnée caractéristique de rendu du support 6 est une moyenne de valeurs de pixels qui montrent le support 6 dans l'image de la vidéo. Les pixels montrant le support 6 peuvent être déterminés à l'avance si la caméra 12 est fixe par rapport au support 6, ou être identifiés par un traitement de reconnaissance de forme ou de détourage mis en œuvre par le module de commande 14.

Ensuite, le module de commande 14 vérifie si la caractéristique de rendu du support 6 dans l'image respecte un critère de rendu prédéfini (étape 204).

Par exemple, cette vérification 204 comprend une comparaison entre la caractéristique de rendu du support et une consigne prédéfinie. La consigne prédéfinie est typiquement égale à une caractéristique de rendu du support 6 préalablement déterminée dans une image de référence acquise par la caméra 12 en l'absence d'éclairage externe. Le critère de rendu n'est alors pas respecté lorsqu'un écart entre la donnée caractéristique de rendu du support 6 dans l'image et la donnée de consigne prédéfinie est supérieur à un seuil. Il est respecté dans le cas contraire.

Le non-respect du critère de rendu révèle l'existence d'une perturbation de rendu du support 6 dans la vidéo causée par l'éclairage externe.

Si le critère de rendu vérifié à l'étape 204 n'est pas respecté, le module de commande 14 ajuste les paramètres d'acquisition vidéo de la caméra 12 de sorte de sorte à atténuer cette perturbation de rendu (étape 206). Au cours de cet ajustement 206, au moins un paramètre d'acquisition vidéo de la caméra 12 change de valeur.

L'étape d'acquisition vidéo 100 est ensuite répétée de manière à obtenir une nouvelle vidéo, en utilisant en particulier chaque valeur paramètre d'acquisition vidéo modifiée à l'issue de l'étape d'ajustement 206. Les étapes de détermination 202 et de vérification 204 sont ensuite répétées sur la nouvelle vidéo, jusqu'à ce que le critère de rendu soit respecté par une image de la première vidéo.

Lorsque le critère de rendu est respecté à l'étape 204, le module de commande 14 met en œuvre une estimation du niveau de la perturbation d'éclairage causé par l'éclairage externe (étape 208), en se fondant sur la dernière valeur atteinte par chaque paramètre d'acquisition vidéo. Ces valeurs sont égales aux valeurs initiales dans le cas où le critère de rendu est vérifié à la suite d'une seule mise en œuvre des étapes 202 et 204, sans qu'il n'y ait eu besoin de réaliser l'étape d'ajustement 206, selon un exemple non couvert par la revendication 1. Sinon, ces valeurs sont en revanche égales aux valeurs modifiées obtenues à l'issue de la dernière mise en œuvre de l'étape d'ajustement 206.

Par exemple, l'étape d'estimation 208 peut comprendre une sélection d'un niveau de perturbation d'éclairage parmi plusieurs niveaux prédéfinis, allant d'un niveau peu ou pas perturbé à un niveau de perturbation maximal, chaque niveau prédéfini étant associé à une gamme de valeurs pour un des paramètres d'acquisition vidéo ayant été ajusté, par exemple le gain. Le niveau sélectionné est associé à une gamme de valeurs comprenant à la valeur atteinte par ce paramètre à l'issue de la répétition de l'étape d'ajustement discutée précédemment.

Le traitement 300 « d'asservissement objet » comprend par ailleurs les sous-étapes suivantes. Comme indiqué précédemment, ce traitement 300 est déclenché lorsque qu'un document en mouvement par rapport au support 6 est détecté par le module de commande 14 sur la base de la vidéo acquise.

Le module de commande 14 détermine une caractéristique du rendu du document dans une image de la vidéo montrant ce document. Au cours de cette étape, le module de commande 14 peut typiquement sélectionner des pixels de cette image montrant le document (sachant que d'autres pixels de cette image peuvent continuer à montrer le support 6, lorsque le document ne fait pas entièrement obstacle entre la caméra 12 et le support 6). Ensuite, le module de commande 14 détermine une mesure statistique d'une dynamique de rendu du document à partir des pixels sélectionnés. Cette dynamique renseigne sur un niveau de saturation du document dans l'image. Par exemple, un revêtement du document peut être fortement réfléchissant, avec pour conséquence qu'un amas de pixels montrant le document est saturé (c'est-à-dire que ces pixels sont tout à la même valeur).

Le module de commande 14 vérifie ensuite si la caractéristique de rendu du document dans l'image respecte ou non un critère prédéfini (étape 304).

Cette vérification 304 comprend par exemple un comptage de pixels dont les valeurs de luminance sont proches d'un extrémum (blanc ou noir), et ensuite comparer le nombre compté avec un seuil. Si le seuil est dépassé, il est considéré que la dynamique de rendu du document est insuffisante. Ceci survient notamment en cas de saturation du document.

Si le critère de rendu du document n'est pas respecté, le module de commande 14 ajuste les paramètres d'acquisition vidéo utilisés par la caméra 12 (étape 306), au cours de l'acquisition de la deuxième vidéo, de manière à étendre la dynamique de rendu du document dans une image subséquente de vidéo. Il est à noter que cet ajustement 306 part des valeurs de paramètres le cas échéant modifiées auparavant par l'étape d'ajustement 206, et conduit à l'obtention de valeurs affinées pour ces paramètres.

L'étape d'acquisition vidéo 100 est ensuite répétée de manière à obtenir une nouvelle vidéo, en utilisant en particulier chaque valeur paramètre d'acquisition vidéo modifiée à l'issue de l'étape d'ajustement 206. Les étapes de détermination 302 et de vérification 304 sont ensuite répétées sur la nouvelle vidéo, jusqu'à ce que le critère de rendu soit respecté par une image de la première vidéo.

Si le critère de rendu du document est respecté du premier coup, l'étape d'ajustement 306 n'est pas mise en œuvre.

En référence à la figure 3, après la mise en œuvre des traitements d'asservissement 200 et 300, le module de commande 14 détecte que le document est posé sur le support 6, immobile par rapport au support 6 (étape 400).

En réponse à cette détection d'immobilité du document, le module de commande 14 détermine, d'après le niveau de perturbation estimé à l'étape 208 (étape 402), au moins un paramètre utilisé par le système pour produire un instantané, dont un paramètre d'éclairage de la source d'éclairage interne et/ou un paramètre d'acquisition d'instantané de la caméra. Au cours de cette étape 402, est en particulier déterminé une deuxième puissance d'éclairage, qui est différente de la première puissance d'éclairage pouvant avoir été utilisée par la source d'éclairage interne 10 au cours de l'étape 100.

La deuxième puissance d'éclairage croît avec le niveau de perturbation estimé lors de l'étape 208. Autrement dit, la deuxième puissance d'éclairage est faible lorsqu'il a été estimé que le niveau de perturbation causé par l'éclairage externe est faible, et la deuxième puissance d'éclairage est élevée lorsqu'il a été estimé que le niveau de perturbation causé par l'éclairage externe est élevé.

Au cours de l'étape 402, le module de commande 14 peut également déterminer des paramètres d'acquisition d'instantané de la caméra 12, en fonction du niveau de perturbation estimé (pour rappel, les paramètres d'acquisition d'instantané sont les paramètres qu'utilise la caméra 12 lorsqu'elle est configurée dans le mode instantané, ce qui n'était pas le cas au cours de la mise en œuvre de l'étape d'acquisition 100, au cours de laquelle la caméra 12 étant configurée en mode vidéo).

Lorsque l'asservissement objet 300 est mis en œuvre, il est également tenu compte de chaque valeur affinée obtenue à l'issue de la dernière mise en œuvre de l'étape d'ajustement 306, pour déterminer chacun de ces paramètres lors de l'étape 402.

Par exemple, le dispositif d'imagerie 1 comprend une mémoire dans laquelle ont été mémorisées différentes préconfigurations, chaque préconfiguration définissant des valeurs prédéfinies pour les paramètres visés par l'étape 402. Chaque préconfiguration est associée dans la mémoire à un niveau de perturbation prédéfini. Par exemple, si cinq niveaux de perturbations ont été prédéfinis, sont mémorisées cinq préconfigurations qui leurs sont respectivement associées.

Dans ce cas, au cours de l'étape 402, le module de commande 14 sélectionne dans la mémoire préconfiguration associée au niveau de perturbation ayant été préalablement estimé au cours de l'étape 208. Si l'asservissement objet 300 n'est pas mis en œuvre, alors les paramètres déterminés au cours de l'étape 402 sont directement ceux de la préconfiguration sélectionnée. Si cet asservissement objet est mis en œuvre, la préconfiguration peut être modulée sur la base des valeurs affinées obtenues à l'issue de l'étape 306.Ensuite, le module de commande 14 met en œuvre un traitement 500 dit traitement « d'asservissement d'instantané ». Ce traitement 500 comprend les sous-étapes suivantes.

Le module de commande 14 pilote la caméra 12 et la source d'éclairage interne 10 de sorte que la caméra 12 acquière un instantané en utilisant les paramètres d'acquisition d'instantané déterminés à l'étape 402, et que, simultanément, la source d'éclairage interne 10 éclaire le document posé sur le support 6 (étape 502).

Au cours de l'étape 502, la source d'éclairage interne 10 utilisant les paramètres d'éclairage suivants : la deuxième puissance d'éclairage déterminée à l'étape 402, avec tous les modules éclairants activés.

L'instantané acquis par la caméra 12 est fourni au module de commande 14.

Le module de commande 14 détermine une caractéristique de rendu du document dans l'instantané (étape 504). Cette caractéristique est par exemple la même que celle déterminée à l'étape 302.

Le module de commande 14 vérifie si la caractéristique de rendu du document dans l'instantané respecte un critère de rendu prédéfini (étape 506). Cette vérification 506 est par exemple similaire à la vérification 304 discutée précédemment.

Si le critère de rendu du document dans l'instantané n'est pas respecté, le module de commande 14 ajuste les paramètres d'acquisition d'instantané utilisés par la caméra 12 et/ou les paramètres d'éclairage utilisés par la source d'éclairage interne 10 (étape 508), de manière à étendre la dynamique de rendu du document, et commande une répétition des étapes 502, 504 et 506 jusqu'à ce que le critère de rendu soit respecté par un instantané acquis par la caméra 12.

Plusieurs stratégies d'ajustement sont envisageables au cours de l'étape 508.

Une première stratégie consiste à mettre en œuvre un traitement similaire à celui de l'étape 306.

Une seconde stratégie consiste à désactiver au moins un des éléments éclairants de la source d'éclairage interne 10.

Il est à noter que les deux stratégies peuvent être combinées. Par exemple, la première stratégie est mise en œuvre au moins une fois. Si celle-ci ne permet pas de satisfaire le critère de rendu attendu, la seconde stratégie est mise en œuvre.

Lorsque le critère de rendu du document dans un instantané est respecté, le traitement 500 d'asservissement d'instantané est terminé.

Le dispositif d'imagerie 1 met en œuvre une analyse du contenu du document montré dans l'instantané acquis ayant satisfait le critère de rendu (étape 600). Cette analyse est connue de l'homme du métier.

Les étapes 402, 500 et 600 peuvent être mises en œuvre pour différentes gammes de longueurs d'onde. Ainsi, il peut être obtenu jusqu'à trois instantanés de type différents : un instantané dans le domaine visible, un instantané dans le domaine infrarouge, et un instantané dans le domaine ultraviolet. Les ajustements réalisés pour ces différents types d'images peuvent être différents.

## Revendications

1. Procédé d'imagerie d'un document, comprenant les étapes suivantes :
- acquisition (100) par une caméra d'une vidéo montrant un support formant un fond d'une cavité ouverte en permanence, pendant qu'aucun objet ne fait obstacle entre le support et la caméra,
- ajustement (206) d'un premier paramètre de la caméra de sorte à atténuer une perturbation de rendu du support dans la vidéo causée par un éclairage parasite provenant d'une source parasite, le premier paramètre atteignant une valeur modifiée à l'issue de l'ajustement,
- à partir de la valeur modifiée, estimation (208) d'un niveau de la perturbation d'éclairage,
- à partir du niveau de la perturbation d'éclairage estimé, détermination (402) d'au moins un deuxième paramètre, dont un paramètre d'éclairage d'une source d'éclairage et/ou un paramètre d'acquisition d'instantané de la caméra,
- pendant qu'un document est posé immobile sur le support, éclairage du document par la source d'éclairage et acquisition par la caméra d'un instantané montrant le document (502), à l'aide du deuxième paramètre déterminé.

2. Procédé selon la revendication précédente, comprenant une répétition des étapes d'acquisition (100) et d'ajustement (206) jusqu'à ce qu'une caractéristique de rendu du support dans une vidéo acquise par la caméra respecte un critère de rendu prédéfini, la valeur modifiée étant atteinte par le premier paramètre à l'issue de la répétition.

3. Procédé selon la revendication précédente, dans lequel la caractéristique du rendu du support est une moyenne de valeurs de pixels qui montrent le support dans une image de la vidéo.

4. Procédé selon l'une des revendications précédentes, comprenant en outre une détection d'immobilité (400) du document par rapport au support, l'éclairage du document par la source d'éclairage et l'acquisition de l'instantané (502) étant mis en œuvre en réponse à la détection d'immobilité.

5. Procédé selon l'une des revendications précédentes, comprenant par ailleurs la mise en œuvre des étapes suivantes jusqu'à ce qu'une caractéristique de rendu du document dans un instantané acquis par la caméra respecte un critère de rendu prédéfini :
- ajustement (402) du deuxième paramètre, et
- acquisition (502) par la caméra d'un autre instantané en utilisant le deuxième paramètre ajusté.

6. Procédé selon la revendication précédente, dans lequel la source d'éclairage comprend plusieurs éléments éclairants orientés vers différentes zones du support, et dans lequel l'ajustement (508) d'au moins un deuxième paramètre comprend une désactivation d'au moins un des éléments éclairants.

7. Procédé selon l'une des revendications 5 à 6, dans lequel la caractéristique de rendu du document dans un instantané acquis par la caméra est une mesure statistique d'une dynamique de pixels montrant le document dans l'instantané.

8. Procédé selon l'une des revendications précédentes, comprenant par ailleurs les étapes suivantes mises en œuvre avant l'acquisition de l'instantané :
- acquisition par la caméra d'une autre vidéo montrant le document se déplaçant vers le support,
- ajustement du premier paramètre depuis la valeur modifiée vers une valeur affinée, jusqu'à ce qu'une caractéristique de rendu du document dans une image de l'autre vidéo respecte un critère de rendu prédéfini, le deuxième paramètre étant déterminé (402) en fonction de la valeur affinée.

9. Procédé selon la revendication précédente, dans lequel la caractéristique de rendu du document dans une image de l'autre vidéo est une mesure statistique d'une dynamique de pixels montrant le document dans l'image de l'autre vidéo.

10. Procédé selon l'une des revendications précédentes, dans lequel le premier paramètre est une durée d'exposition ou un gain de la caméra.

11. Procédé selon l'une des revendications précédentes, dans lequel :
- pendant l'acquisition de la vidéo, la source d'éclairage éclaire le support avec une première puissance d'éclairage,
- pendant l'acquisition de l'instantané, la source d'éclairage éclaire le support avec une deuxième puissance d'éclairage supérieure à la première puissance d'éclairage.

12. Procédé selon l'une des revendications précédentes, dans lequel la détermination (402) d'au moins un deuxième paramètre comprend la détermination d'une puissance d'éclairage qui croît avec le niveau estimé de la perturbation d'éclairage.

13. Dispositif (1) d'imagerie d'un document, comprenant un support (6) formant un fond d'une cavité ouverte en permanence, une caméra (12), une source d'éclairage (10) et un module de commande (14) configuré pour :
- commander l'acquisition par la caméra (12) d'une vidéo montrant le support (6) pendant qu'aucun objet ne fait obstacle entre le support (6) et la caméra (12),
- ajuster un premier paramètre de la caméra (12) de sorte à atténuer une perturbation de rendu du support (6) dans la vidéo causée par un éclairage parasite provenant d'une source parasite, le premier paramètre atteignant une valeur modifiée à l'issue de l'ajustement,
- à partir de la valeur modifiée, estimer un niveau de la perturbation d'éclairage,
- à partir du niveau de la perturbation d'éclairage estimé, déterminer au moins un deuxième paramètre, dont un paramètre d'éclairage de la source d'éclairage (10) et/ou un paramètre d'acquisition d'instantané de la caméra (12),
- pendant qu'un document est posé immobile sur le support (6), commander l'éclairage du document par la source d'éclairage (10) et l'acquisition par la caméra (12) d'un instantané montrant le document (502), à l'aide du deuxième paramètre déterminé.

## Patentansprüche

1. Bildgebungsverfahren eines Dokuments, das die folgenden Schritte umfasst:
- Erfassung (100) eines Videos durch eine Kamera, das einen Träger zeigt, der den Hintergrund einer dauerhaft offenen Vertiefung bildet, während sich kein Objekt zwischen dem Träger und der Kamera befindet,
- Einstellung (206) eines ersten Parameters der Kamera, um eine durch das Streulicht einer Streulichtquelle verursachte Wiedergabestörung des Trägers in dem Video abzuschwächen, wobei der erste Parameter nach der Einstellung einen geänderten Wert erreicht,
- ausgehend von dem geänderten Wert Ermittlung (208) eines Grads der Beleuchtungsstörung,
- ausgehend von dem ermittelten Grad der Beleuchtungsstörung Bestimmung (402) mindestens eines zweiten Parameters, darunter eines Beleuchtungsparameters einer Lichtquelle und/oder eines Momentaufnahmeparameters der Kamera,
- während ein Dokument unbeweglich auf dem Träger liegt, Beleuchten des Dokuments durch die Lichtquelle und mithilfe des zweiten bestimmten Parameters Erfassung einer das Dokument (502) zeigenden Momentaufnahme durch die Kamera.

2. Verfahren nach dem vorhergehenden Anspruch, das eine Wiederholung der Schritte der Erfassung (100) und der Einstellung (206) umfasst, bis ein Wiedergabemerkmal des Trägers in einem von der Kamera erfassten Video ein vordefiniertes Wiedergabekriterium erfüllt, wobei der geänderte Wert durch den ersten Parameter am Ende der Wiederholung erreicht wird.

3. Verfahren nach dem vorhergehenden Anspruch, in dem das Wiedergabemerkmal des Trägers ein Mittelwert von Pixelwerten ist, die den Träger in einem Bild des Videos zeigen.

4. Verfahren nach einem der vorhergehenden Ansprüche, das ferner eine Bewegungslosigkeitserkennung (400) des Dokuments in Bezug auf den Träger umfasst, wobei die Beleuchtung des Dokuments durch die Lichtquelle und die Erfassung der Momentaufnahme (502) als Reaktion auf die Erkennung der Bewegungslosigkeit durchgeführt werden.

5. Verfahren nach einem der vorhergehenden Ansprüche, das ferner die Durchführung der folgenden Schritte umfasst, bis ein Wiedergabemerkmal des Dokuments in einer Momentaufnahme der Kamera ein vordefiniertes Wiedergabekriterium erfüllt:
- Einstellung(402) des zweiten Parameters und
- Erfassung (502) einer weiteren Momentaufnahme durch die Kamera unter Verwendung des zweiten eingestellten Parameters.

6. Verfahren nach dem vorhergehenden Anspruch, in dem die Lichtquelle mehrere Leuchtelemente umfasst, die auf verschiedene Bereiche des Trägers gerichtet sind, und in dem die Einstellung (508) mindestens eines zweiten Parameters eine Deaktivierung mindestens eines der Leuchtelemente umfasst.

7. Verfahren nach einem der Ansprüche 5 bis 6, in dem das Wiedergabemerkmal des Dokuments in einer von der Kamera erfassten Momentaufnahme eine statistische Messung der Pixeldynamik ist, die das Dokument in der Momentaufnahme zeigt.

8. Verfahren nach einem der vorhergehenden Ansprüche, das ferner die folgenden, vor der Erfassung der Momentaufnahme durchgeführten Schritte umfasst:
- Erfassung eines weiteren Videos durch die Kamera, das zeigt, wie sich das Dokument auf den Träger zubewegt,
- Einstellung des ersten Parameters ausgehend von dem geänderten Wert hin zu einem genaueren Wert, bis ein Wiedergabemerkmal des Dokuments in einem Bild des anderen Videos ein vordefiniertes Wiedergabekriterium erfüllt, wobei der zweite Parameter auf der Grundlage des genaueren Wertes bestimmt wird (402).

9. Verfahren nach dem vorhergehenden Anspruch, in dem das Wiedergabemerkmal des Dokuments in einem Bild des anderen Videos die statistische Messung der Pixeldynamik ist, die das Dokument in dem Bild des anderen Videos zeigt.

10. Verfahren nach einem der vorhergehenden Ansprüche, in dem der erste Parameter eine Belichtungszeit oder eine Verstärkung der Kamera ist.

11. Verfahren nach einem der vorhergehenden Ansprüche, in dem:
- die Lichtquelle den Träger während der Erfassung des Videos mit einer ersten Beleuchtungsstärke beleuchtet,
- die Lichtquelle den Träger während der Erfassung der Momentaufnahme mit einer zweiten Beleuchtungsstärke beleuchtet, die größer ist als die erste Beleuchtungsstärke ist.

12. Verfahren nach einem der vorhergehenden Ansprüche, in dem die Bestimmung (402) mindestens eines zweiten Parameters das Bestimmen einer Beleuchtungsstärke umfasst, die mit dem ermittelten Grad der Beleuchtungsstörung ansteigt.

13. Vorrichtung (1) zur Bildgebung eines Dokuments mit einem Träger (6), der den Hintergrund einer dauerhaft offenen Vertiefung bildet, einer Kamera (12), einer Lichtquelle (10) und einem Steuermodul (14), das so gestaltet ist, dass es:
- die Erfassung eines den Träger (6) zeigenden Videos durch die Kamera (12) steuert, während sich kein Objekt zwischen dem Träger (6) und der Kamera (12) befindet,
- einen ersten Parameter der Kamera (12) einstellt, um eine durch das Streulicht einer Streulichtquelle verursachte Wiedergabestörung des Trägers (6) in dem Video abzuschwächen, wobei der erste Parameter nach der Einstellung einen geänderten Wert erreicht,
- ausgehend von dem geänderten Wert einen Grad der Beleuchtungsstörung ermittelt,
- ausgehend von dem ermittelten Grad der Beleuchtungsstörung mindestens einen zweiten Parameter bestimmt, darunter einen Beleuchtungsparameter der Lichtquelle (10) und/oder einen Parameter zur Erfassung einer Momentaufnahme der Kamera (12),
- während ein Dokument unbeweglich auf dem Träger (6) liegt, die Beleuchtung des Dokuments durch die Lichtquelle (10) und die Erfassung einer das Dokument (502) zeigenden Momentaufnahme durch die Kamera (12)unter Verwendung des zweiten bestimmten Parameters steuert.

## Claims

1. Method for imaging a document, comprising the steps of:
- acquiring (100) by a camera a video showing a support forming a permanently open cavity background, while no object obstructs the support and the camera,
- adjusting (206) a first camera parameter so as to mitigate a rendering disturbance of the support in the video caused by stray light from a parasitic source, the first parameter reaching a modified value at the end of the adjustment,
- based on the modified value, estimating (208) a level of the illumination disturbance,
- based on the estimated illumination disturbance level, determining (402) at least a second parameter, comprising an illumination parameter of a lighting source and/or a snapshot acquisition parameter of the camera,
- while a document is stationary on the support, illuminating the document by the lighting source and acquiring by the camera a snapshot showing the document (502), using the determined second parameter.

2. Method according to the previous claim, comprising repeating the acquisition (100) and adjustment (206) steps until a rendering feature of the support in a video acquired by the camera meets a predefined rendering criterion, the modified value being reached by the first parameter at the end of the repetition.

3. Method according to the previous claim, wherein the rendering feature of the support is an average of pixel values depicting the support in an image of the video.

4. Method according to any one of the preceding claims, further comprising detecting (400) immobility of the document relative to the support, the illuminating of the document by the lighting source and acquisition of the snapshot (502) being carried out in response to the immobility detection.

5. Method according to any one of the preceding claims, further comprising performing the following steps until a rendering feature of the document in a snapshot acquired by the camera meets a predefined rendering criterion:
- adjusting (402) the second parameter, and
- acquiring (502) by the camera another snapshot using the adjusted second parameter.

6. Method according to claim 5, wherein the lighting source comprises multiple lighting elements oriented toward different areas of the support, and wherein the adjustment (508) of at least one second parameter comprises deactivating at least one of the lighting elements.

7. Method according to any one of claims 5 to 6, wherein the rendering feature of the document in a snapshot acquired by the camera is a statistical measure of a pixel dynamics depicting the document in the snapshot.

8. Method according to any one of the preceding claims, further comprising, prior to the snapshot acquisition, the steps of:
- acquiring by the camera another video showing the document moving toward the support,
- adjusting the first parameter from the modified value to a refined value until a rendering feature of the document in an image of the other video meets a predefined rendering criterion, the second parameter being determined (402) based on the refined value.

9. Method according to the previous claim, wherein the rendering feature of the document in an image of the other video is a statistical measure of a pixel dynamics depicting the document in the image of the other video.

10. Method according to any one of the preceding claims, wherein the first parameter is an exposure time or a gain of the camera.

11. Method according to any one of the preceding claims, wherein:
- during video acquisition, the lighting source illuminates the support with a first illumination power,
- during snapshot acquisition, the lighting source illuminates the support with a second illumination power higher than the first illumination power.

12. Method according to any one of the preceding claims, wherein determining (402) at least one second parameter comprises determining an illumination power that increases with the estimated level of illumination disturbance.

13. Device (1) for imaging a document, comprising a support (6) forming a permanently open cavity background, a camera (12), a lighting source (10), and a control module (14) configured to:
- control acquisition by the camera (12) of a video showing the support (6) while no object obstructs the support (6) and the camera (12),
- adjust a first camera parameter (12) so as to mitigate a rendering disturbance of the support (6) in the video caused by stray light from a parasitic source, the first parameter reaching a modified value at the end of the adjustment,
- based on the modified value, estimate a level of the illumination disturbance,
- based on the estimated illumination disturbance level, determine at least a second parameter, comprising an illumination parameter of the lighting source (10) and/or a snapshot acquisition parameter of the camera (12),
- while a document is stationary on the support (6), control illumination of the document by the lighting source (10) and acquisition by the camera (12) of a snapshot showing the document (502), using the determined second parameter.
